# EUROPÄISCHE PATENTSCHRIFT

(11) **EP 2 944 378 B1**
(45) Veröffentlichungstag und Bekanntmachung des Hinweises auf die Patenterteilung: **17.06.2020**
(21) Anmeldenummer: 15167122.9
(22) Anmeldetag: 11.05.2015
(51) Int. Cl.: B01J 37/08, B01J 37/02, B01J 23/75, B22F 3/00, B01J 35/04, B01J 35/10, B01J 37/00, C22C 19/07

(54) **KATALYTISCH WIRKSAMES PORÖSES ELEMENT UND VERFAHREN ZU SEINER HERSTELLUNG**
CATALYTICALLY ACTIVE POROUS ELEMENT AND METHOD FOR MANUFACTURING THE SAME
ÉLÉMENT POREUX À ACTIVITÉ CATALYTIQUE ET SON PROCÉDÉ DE FABRICATION

(30) Priorität: 15.05.2014 DE 102014209216
(43) Veröffentlichungstag der Anmeldung: 18.11.2015
(73) Patentinhaber: GLATT GMBH, 79589 Binzen (DE)
(72) Erfinder: Waag, Ulf, 79713 Bad Säckingen (DE); Reger-Wagner, Norman, 07639 Bad Klosterlausnitz (DE)
(74) Vertreter: Pfenning, Meinig & Partner mbB

(56) Entgegenhaltungen:
- WO-A1-2012/159258
- CN-A- 101 509 085
- DE-C1- 10 150 948
- US-A- 4 826 799
- US-A1- 2003 153 981
- US-A1- 2011 000 128
- US-A1- 2012 329 889
- US-A1- 2014 004 259

## Beschreibung

Die Erfindung betrifft ein katalytisch wirksames Element und ein Verfahren zu seiner Herstellung. Die erfindungsgemäßen Elemente können bevorzugt bei der Fischer-Tropsch-Synthese eingesetzt werden.

Eine Technologie zur Herstellung von metallischen und keramischen offenzelligen Strukturen nach dem sogenannten Schwartzwalder Verfahren ist Stand der Technik. Dabei wird bevorzugt ein offenzelliger Polyurethanschaumkörper mit einer Metallpulver-Binder bzw. Keramikpulver-Binder Suspension beschichtet und anschließend bei einer Wärmebehandlung entbindert (Entfernung der organischen Komponenten) und gesintert.

Diese Technologie ist zur wirtschaftlichen Herstellung von flächigen offenzelligen Strukturen etabliert.

Die Strukturellen Vorteile von Schaumkörpern sind hinlänglich bekannt:
- Niedriger Druckverlust (im Vergleich zu Schüttgut-Katalysatoren) Große Oberflächen (im Vergleich zu Kugelschüttungen) erlauben eine Prozessintensivierung
- Nahezu ideale Strömungsverteilung
   ∘ Bessere Durchmischung der Reaktanden
   ∘ Konvektive Wärmeverteilung vereinfacht das Wärmemanagement

Die Vorteile von Katalysatoren auf Kobalt-Basis sind:
- Hohe Wärmeleitfähigkeit
   ∘ Bessere Homogenität der Temperatur (z.B. weniger Hot-Spots bei exothermen Reaktionen)
   ∘ Besserer Wärmetransport, einfacheres Wärmemanagement (Wärmeabfuhr bei exothermen Reaktionen an Reaktorwände)
- C5-Selektivität bei Fischer-Tropsch-Reaktionen

Weitere Vorteile eine Ausführung von Kobalt-Katalysatoren als massiver Metallschaumkörper sind:
- Über die Pulvermetallurgische Herstellung kann eine sehr gute Kontrolle über die chemische Zusammensetzung, d.h. für Reaktionen schädliche Elemente können sicher ausgeschlossen werden (z.B. kein Fe, Ni, Cr, S, Na, Mg, Ca, ...), erreicht werden
- Die Festigkeit ist an die Anforderungen der Anwendung anpassbar (durch Variation der Dichte)
- Im Vergleich zu alternativen Schaumkörper-Routen (die das Kobalt entweder über dünne flächige Co-Beschichtungen (z.B. elektrochemische Abscheidung) oder über eine Washcoat-Beschichtung realisieren)
   ∘ Keine Einschränkung bei der Trägerauswahl durch ungewünschte Fremdelemente
   ∘ Weniger Empfindlich gegenüber Abrieb und Abtrag, da das Reservoir an Kobalt größer ist; hieraus resultieren längere Einsatzzeiten

Eine Herstellung auf schmelzmetallurgischem Weg ist vergleichsweise teuer, zudem sind feinere Strukturen mit höheren spezifischen Oberflächen nur mit erheblichem Aufwand herstellbar.

So ist es bei der Umwandlung von Biogas zu flüssigem Kraftstoff aus US 2011/0000128 A1 bekannt mehrere Übergangsmetalle zur Katalyse zu nutzen.

WO 2012/159258 A1 und US 2014/0216807 betreffen Dichtungen mit elektromagnetischer Schutzwirkung.

In US 2003/0153981 A1 sind implantierbare medizinische Einrichtungen mit einem porösen Gerüst und einer Partikelbeschichtung beschrieben.

Aus US 4,826,799 A sind Möglichkeiten zur Herstellung von Katalysatoren gemäß dem Raney Prozess bekannt.

DE 101 50 948 C1 betrifft ein Verfahren zur Herstellung esinterte poröser Körper.

Auch eine Herstellung von reinen Co-Schaumkörpern auf pulvermetallurgischem Weg ist durch die hohen erforderlichen Sintertemperaturen vergleichsweise aufwendig und kostenintensiv.

Es ist daher Aufgabe der Erfindung, die Herstellungskosten im Vergleich zur Herstellung von massiven, d.h. nicht beschichteten oder geträgerten, Kobalt-Schaumkörpern zu senken. Dabei soll der beim Sintern entstehende mechanische Verbund nicht durch ein Versintern von reinen bzw. vorlegierten Kobalt-Partikeln erreicht und eine ausreichend große katalytisch nutzbare Oberfläche eingehalten werden.

Erfindungsgemäß wird diese Aufgabe mit einem Element, das die Merkmale des Anspruchs 1 aufweist, gelöst. Das Element kann mit einem Verfahren gemäß Anspruch 7 hergestellt werden. Vorteilhafte Ausgestaltungen und Weiterbildungen der Erfindung können mit in untergeordneten Ansprüchen bezeichneten Merkmalen realisiert werden.

Ein erfindungsgemäßes katalytisch wirksames poröses Element wird aus mindestens 40 Masse-% reinem Kobalt, einer Kobaltlegierung oder einer mit Kobalt gebildeten intermetallischen Phase und mindestens einem weiteren chemischen Element und/oder mindestens einer chemischen Verbindung, die eine Matrix, in die Kobaltpartikel eingebettet sind, gebildet. Bevorzugt sollten mindestens 50 % Kobalt enthalten sein.

Dabei weist das mindestens eine chemische Element und/oder die mindestens eine chemische Verbindung eine niedrigere Sinter- und/oder Schmelztemperatur als Kobalt die jeweilige Kobaltlegierung oder intermetallische Phase auf. Allein oder zusätzlich dazu kann Kobalt teilweise darin lösbar sein und/oder gemeinsam mit Kobalt ein Eutektikum und/oder Peritektikum bilden.

Als chemisches Element und/oder chemische Verbindung sollen Kupfer, Zink oder Mangan, Aluminium oder eine Legierung (bevorzugt eine eutektische Legierung) oder intermetallische Phasen dieser Metalle, ein Carbid, ein Phosphid oder ein Borid, insbesondere Co₃B, die Matrix bilden. Es können aber auch Legierungen und intermetallische Phasen, in denen Kobalt enthalten ist, hierfür eingesetzt werden.

Es sollte eine Porosität von mindestens 80 % und Porengrößen von maximal 3mm eingehalten sein.

Das Element sollte äußere Abmessungen aufweisen, die nicht größer als 40 mm * 40 mm * 20 mm sind und/oder der äußere Radius kleiner als 40 mm sein. Dadurch können günstige thermische Verhältnisse und eine gute Durchströmbarkeit, die eine verbesserte katalytische Wirkung hervorruft, erreicht werden. Scheibenförmige Elemente können aber auch größere Außendurchmesser aufweisen.

Außerdem sollen mindestens 50 %, bevorzugt mindestens 70 % der Oberfläche mit Kobalt oder einer Kobalt-Legierung gebildet sein.

Bei der Herstellung wird ein polymeres poröses Element an seiner Oberfläche mit einer Suspension beschichtet. Die Suspension wird mit einer Flüssigkeit und zumindest Partikeln aus Kobalt, einer Kobaltlegierung oder einer intermetallischen Phase, in der Kobalt enthalten ist hergestellt. Zusätzlich ist mindestens ein chemisches Element und/oder mindestens eine chemische Verbindung in Partikelform oder in einer Form in der Suspension enthalten, das/die bei einer thermischen Behandlung eine Matrix eines chemischen Elements und/oder einer chemischen Verbindung ausbildet, in der Kobaltpartikel, Kobaltlegierungspartikel oder Partikel einer Kobalt enthaltenden intermetallischen Phase eingebettet sind.

Bei einer ersten thermischen Behandlung werden die Flüssigkeit und/oder organische Komponenten entfernt. Bei einer zweiten thermischen Behandlung bei erhöhter Temperatur wird ein Schmelzen und/oder eine Versinterung des mindestens einen chemischen Elements und/oder der mindestens einen chemischen Verbindung erreicht und dabei werden die Kobaltpartikel, Kobaltlegierungspartikel oder Partikel einer Kobalt enthaltenden intermetallischen Phase in die mit dem mindestens einen chemischen Element und/oder der mindestens einen chemischen Verbindung gebildete Matrix eingebettet.

Die Matrix kann mit dem in der Suspension enthaltenen chemischen Element oder der chemischen Verbindung gebildet werden. Es ist aber auch möglich, dass ein bei einer thermischen Behandlung reaktiv gebildetes oder freigesetztes chemisches Element oder eine chemische Verbindung die Matrix bildet. In diesem Fall kann ein geeigneter Precursor in der Suspension enthalten sein und ggf. eine dazu geeignete Atmosphäre bei mindestens einer der beiden thermischen Behandlungen eingehalten werden. Dies kann z.B. eine reduzierende Atmosphäre mit Wasserstoff oder Formiergas sein.

Die Suspension mit Wasser und/oder einer organischen Substanz, insbesondere Polyvinylalkohol und/oder Pyrrolidon hergestellt werden. Dabei kann eine geeignete Viskosität durch Einhaltung bestimmter Feststoffantelle und/oder des Anteils einer organischen Substanz, die dabei bevorzugt auch Bindereigenschaften aufweist, eingehalten werden.

Bei geeigneter Wahl des/der die Matrix bildenden chemischen Elements und/oder chemischen Verbindung kann Kobalt bei der zweiten thermischen Behandlung teilweise in dem mindestens einen chemischen Element und/oder der mindestens einen chemischen Verbindung gelöst werden. Es verbleibt aber ein Anteil an einer zumindest kobaltreichen Phase, in der mindestens 50 Masse-% Kobalt enthalten sind.

Vorteilhaft kann Kobalt, eine Kobaltlegierung oder eine mit Kobalt gebildete intermetallische Phase soll mit einer mittleren Partikelgröße, die größer als die mittlere Partikelgröße des mindestens einen chemischen Elements und/oder der mindestens einen chemischen Verbindung ist, eingesetzt werden. Die mittlere Partikelgröße sollte mindestens doppelt so groß gewählt werden, wie die anderen eingesetzten Partikel. Dies verbessert die Matrixbildung und außerdem kann so der Anteil der Oberfläche, der mit Kobalt gebildet ist, erhöht werden. Außerdem kann dadurch eine Versinterung der Kobalt- oder Kobalt enthaltenden Partikel zumindest behindert werden, so dass diese Partikel als solche in der Matrix eingebettet sind. Die Sinterung von die Matrix bildenden entsprechend kleinen Partikeln kann aber erleichtert bzw. verbessert werden.

Die Aufgabe dieser Zweitphase, die die Matrix bildet, ist es, einen mechanischen Verbund herzustellen; dabei kann sich diese Zweitphase auch im Prozess (teilweise) wiederauflösen, nachdem sie diesen Verbund geschaffen hat.

Über die pulvermetallurgische Herstellung kann eine sehr gute Kontrolle über die chemische Zusammensetzung erreicht werden. Es kann ausgeschlossen werden, dass keine für die katalytische Wirkung schädlichen chemischen Elemente, z.B. kein Fe, Ni, Cr, S, Na, Mg, Ca enthalten sind.

Die Festigkeit der erfindungsgemäßen Elemente kann an die Anforderungen der Anwendung angepasst werden, was beispielsweise durch Wahl einer geeigneten Dichte oder geeigneten Zusammensetzung möglich ist.

Im Vergleich zu alternativen Schaumkörper-Routen sind erfindungsgemäße Elemente weniger empfindlich gegenüber Abrieb und Abtrag und bilden ein größeres Co-Reservoir, was längere Einsatzzeiten ermöglicht. Durch geeignete Wahl des die Matrix bildenden chemischen Elements oder der jeweiligen chemischen Verbindung kann eine verbesserte thermische Leitfähigkeit und eine höhere Wärmeabfuhr erreicht werden.
Mit den erfindungsgemäßen Elementen kann dem Nachteil, der durch das spröde Kobalt auftreten würde, durch den im Verhältnis duktileren Matrixwerkstoff, entgegengewirkt werden.

Nachfolgend soll die Erfindung anhand von Beispielen näher erläutert werden.

### Beispiel 1

Es wurde eine Suspension mit einer Pulvermischung aus 38 Masse-% einer AlCo-Legierung (Kobalt-Anteil: 32 Masse-%) und 62 Masse-% einer festen intermetallischen Phase (Al₁₃Co₄) mit Polyvinylalkohol als organischem Binder angesetzt. Es wurde eine mittlere Partikelgröße d₅₀ von 10µm eingehalten. Mit dieser Suspension wurden Polyurethan-Schaumkörper mit einer Porengröße von 30 ppi und Abmessungen von 200 mm * 100 mm * 20 mm beschichtet.

Bei der ersten thermischen Behandlung wurde das Material bei einer Temperatur bis 600°C in einer Wasserstoffatmosphäre entbindert und bei einer zweiten thermischen Behandlung langsam bis zu einer Temperatur von 1150°C erhitzt.

Bei dieser Temperatur zerfällt die intermetallische Phase (Al₁₃Co₄) in eine flüssige und weitere intermetallische Phasen. Die flüssige Phase bildet beim Abkühlen die Matrix als Bindephase zwischen den nicht aufgeschmolzenen CoAl-Partikeln.

Nach dem Sintern betrug die Dichte 0,8 g/cm³.

### Beispiel 2

Es wurde eine Suspension mit einer Pulvermischung aus 95 Masse-% Kobalt und 5 Masse-% Co₃B mit Polyvinylalkohol als organischem Binder angesetzt. Mit dieser Suspension wurden Polyurethan-Schaumkörper mit einer Porengröße von 40 ppi und Abmessungen von 200 mm * 100 mm * 20 mm beschichtet, Nach dem Trocknen betrug die Dichte des erhaltenen Grünlings 0,7 g/cm³. Die Partikel hatten mittlere Partikelgrößen d₅₀ von 10µm.

Co₃B schmilzt bei 1125 °C inkongruent, zudem bildet es mit Co ein Eutektikum bei 3,8 Masse-% B bei einer Temperatur von 1110 °C.

Bei der ersten thermischen Behandlung in einer Wasserstoffatmosphäre wurde das Material bei einer Temperatur bis 600 °C entbindert und bei einer zweiten thermischen Behandlung bei einer Temperatur von ca. 1150 °C wurde das Co₃B geschmolzen. Die beim Erstarren nach Abkühlung entstandene Bindephase zwischen den nicht aufgeschmolzenen Co-reichen Partikeln bestand aus dem eutektischen Gemisch und bildete die Matrix in die Kobalt und Coreiche Partikel eingebettet waren. Es lagen aber, wie beim Beispiel 1 Oberflächenbereiche, die aus Kobalt gebildet waren frei.

### Beispiel 3

Es wurde eine Suspension mit einer Pulvermischung aus 68 Masse- % Kobalt und 32 Masse-% Mangan mit Polyvinylalkohol als organischem Binder angesetzt. Es wurden mittlere Partikelgrößen d₅₀ für Kobalt von 20 µm und für Mangan von 10 µm gewählt. Mit dieser Suspension wurden Polyurethan-Schaumkörper mit einer Porengröße von 25 ppi und Abmessungen von 200 mm * 100 mm * 20 mm beschichtet.

Bei der ersten thermischen Behandlung in einer Wasserstoffatmopshäre wurde das Material bei einer Temperatur bis 600 °C entbindert und dann wurde bei der zweiten thermischen Behandlung bei Temperaturen bis ca. 1250 °C der Mangan-Anteil zumindest teilweise aufgeschmolzen. Dabei wurde das geschmolzene Mangan teilweise vom festen Kobalt gelöst. Kobalt löste sich teilweise In der flüssigen Phase des Mangan. Es entstand ein Verbund aus Kobalt-reichen Partikeln, der von einer etwas Kobalt-ärmeren Matrix zusammengehalten wurde. Auch hier waren große Oberflächenbereiche aus reinem Kobalt gebildet, die katalytisch nutzbar sind. Nach dem Sintern betrug die Dichte des Katalysators 0,9 g/ccm.

### Beispiel 4

Es wurde eine Suspension mit einer Pulvermischung aus 32,25 Masse-% Kupferacetat als Precursor für Kupfer und 67,75 Masse-% Kobalt mit Polyvinylalkohol als organischem Binder angesetzt. Es wurden dabei mittlere Partikelgrößen d₅₀ von 30µm eingehalten.

Mit dieser Suspension wurden Polyurethan-Schaumkörper mit einer Porengröße von 10 ppi und Abmessungen von 200 mm * 100 mm * 20 mm beschichtet.

Bei der ersten thermischen Behandlung in einer Wasserstoffatmosphäre wurden bei einer Temperatur bis 600 °C die organischen Komponenten entfernt. Dabei wird auch das Kupferacetat zu Kupfer reduziert. Das Mischungsverhältnis betrug Jetzt 84 Masse-% Kobalt zu 16 Masse-% Kupfer.

Bei einer zweiten thermischen Behandlung in einer Wasserstoffatmosphäre wurde dann bei einer Temperatur von ca. 1150 °C der Kupfer-Anteil aufgeschmolzen. Kupfer und Kobalt gehen bei diesem Mischungsverhältnis ab etwa 1110 °C von einem fest-fest Zweiphasengebiet in ein flüssig-fest Zweiphasengebiet über. Die feste Phase erstreckt sich auf der Co-reichen Seite bis etwa 87 Masse-% Kobalt, die flüssige Phase auf der Cu-reichen Seite bis etwa 94,5 Masse-% Kupfer.

Beim Erstarren bildete die Cu-reiche Phase den mechanisch festen Verbund, also eine Matrix zwischen den nicht aufgeschmolzenen Co-reichen Partikeln, so dass diese Partikel in eine Matrix aus Kupfer eingebettet waren, wobei die Co-reichen Partikel nicht vollständig vom Kupfer umschlossen waren, so dass ein großer Teil der Co-reichen Partikel frei zugänglich sind und für eine katalytische Wirkung genutzt werden können. Nach dem Sintern betrug die Dichte 1 g/cm³.

## Patentansprüche

1. Katalytisch wirksames poröses Element, das mindestens 40 Masse-% Kobalt enthält und mit mindestens einem weiteren chemischen
Element und/oder mindestens einer chemischen Verbindung, die eine Matrix, in die Partikel aus reinem Kobalt, einer Kobaltiegierung oder einer mit Kobalt gebildeten intermetallischen Phase eingebettet sind, bildet und
das mindestens eine chemische Element und/oder die mindestens eine chemische Verbindung eine niedrigere Sinter- und/oder Schmelztemperatur als Kobalt, die jeweilige Kobaltlegierung oder intermetallische Phase aufweist und/oder
teilweise Kobalt darin lösbar ist und/oder
gemeinsam mit Kobalt ein Eutektikum und/oder Peritektikum bilden;
wobei mindestens 50 % der Oberfläche mit Kobalt, einer Kobalt-Legierung oder einer mit Kobalt gebildeten intermetallischen Phase,
das/die in der Matrix,
die mit einem weiteren chemischen Element und/oder mindestens einer chemischen Verbindung gebildet ist,
eingebettet ist, gebildet ist, und
als chemisches Element und/oder chemische Verbindung Kupfer, Aluminium, Mangan, Zink, Titan, Kobalt oder eine Legierung oder intermetallische Phase dieser Metalle, ein Carbid, ein Phosphid oder ein Borid die Matrix bildet.

2. Element nach dem vorhergehenden Anspruch, **dadurch gekennzeichnet, dass** Co₃B, die Matrix bildet.

3. Element nach einem der vorhergehenden Ansprüche, **dadurch gekennzeichnet, dass** eine Porosität von mindestens 80 % eingehalten wird.

4. Element nach Anspruch 1, 2, oder 3, **dadurch gekennzeichnet, dass** eine Porengröße von maximal 3mm eingehalten wird.

5. Element nach einem der vorhergehenden Ansprüche, **dadurch gekennzeichnet, dass** das Element äußere Abmessungen aufweist, die nicht größer als 40 mm * 40 mm * 10 mm sind und/oder der äußere Radius kleiner als 40 mm ist.

6. Verfahren zur Herstellung eines katalytisch wirksamen porösen Elements nach einem der vorhergehenden Ansprüche, bei dem ein polymeres poröses Element an seiner Oberfläche mit einer Suspension beschichtet wird, wobei die Suspension mit einer Flüssigkeit und zumindest Partikeln aus Kobalt, einer Kobaltlegierung oder einer intermetallischen Phase, in der Kobalt enthalten ist, hergestellt worden ist und zusätzlich mindestens ein chemisches Element und/oder mindestens eine chemische Verbindung in Partikelform oder in einer Form in der Suspension enthalten ist/sind, bei der bei einer thermischen Behandlung eine Matrix eines chemischen Elements und/oder einer chemischen Verbindung ausgebildet wird, in der Kobaltpartikel, Kobaltlegierungspartikel oder Partikel einer Kobalt enthaltenden intermetallischen Phase eingebettet sind, und
bei einer ersten thermischen Behandlung die Flüssigkeit und/oder organische Komponenten entfernt werden und
bei einer zweiten thermischen Behandlung bei erhöhter Temperatur ein Schmelzen und/oder eine Sinterung des mindestens einen chemischen Elements und/oder der mindestens einen chemischen Verbindung erreicht wird, und
dabei die Kobaltpartikel, die Partikel die mit einer intermetallischen Phase, in der Kobalt enthalten ist, und/oder Kobaltiegierungspartikel in die mit dem mindestens einen chemischen Element und/oder der mindestens einen chemischen Verbindung gebildete Matrix eingebettet werden, wobei
aus oder mit Kobalt gebildete Partikel mit einer mittleren Partikelgröße, die größer als die mittlere Partikelgröße des mindestens einen chemischen Elements und/oder der mindestens einen chemischen Verbindung ist, eingesetzt und die Partikel, die aus oder mit Kobalt gebildet sind, in die Matrix eingebettet werden.

7. Verfahren nach Anspruch 6, **dadurch gekennzeichnet, dass** die Suspension mit Wasser und/oder einer organischen Flüssigkeit, insbesondere Polyvinylalkohol und/oder Pyrrolidon hergestellt wird.

8. Verfahren nach Anspruch 6 oder 7, **dadurch gekennzeichnet, dass** Kobalt bei der zweiten thermischen Behandlung teilweise in dem mindestens einen chemischen Element und/oder der mindestens einen chemischen Verbindung gelöst wird.

9. Verfahren nach einem der Ansprüche 6 bis 8, **dadurch gekennzeichnet, dass** Kobalt-, Kobaltlegierungspartikel oder Partikel einer mit Kobalt gebildeten intermetallischen Phase eingesetzt werden, die eine mittlere Partikelgröße aufweisen, die mindestens doppelt so groß gewählt ist, wie die anderen eingesetzten Partikel.

## Claims

1. Catalytically active porous element which contains at least 40% by mass of cobalt and comprises at least one further chemical element and/or at least one chemical compound which forms a matrix in which particles of pure cobalt, a cobalt alloy or an intermetallic phase comprising cobalt are embedded, wherein
the at least one chemical element and/or the at least one chemical compound has a lower sintering temperature and/or melting point than cobalt, the respective cobalt alloy or intermetallic phase and/or
cobalt is partially soluble therein and/or
together with cobalt forms a eutectic and/or peritectic;
and wherein at least 50% of the surface area is formed by cobalt, a cobalt alloy or an intermetallic phase comprising cobalt
which is embedded in the matrix which comprises a further chemical element and/or at least one chemical compound, and
copper, aluminium, manganese, zinc, titanium, cobalt or an alloy or intermetallic phase of these metals, a carbide, a phosphide or a boride as chemical element and/or chemical compound forms the matrix.

2. Element according to the preceding claim, **characterized in that** Co₃B forms the matrix.

3. Element according to either of the preceding claims, **characterized in that** a porosity of at least 80% is adhered to.

4. Element according to Claim 1, 2 or 3, **characterized in that** a pore size of not more than 3 mm is adhered to.

5. Element according to any of the preceding claims, **characterized in that** the element has exterior dimensions which are not greater than 40 mm * 40 mm * 10 mm and/or the outer radius is less than 40 mm.

6. Process for producing a catalytically active porous element according to any of the preceding claims, wherein a polymeric porous element is coated on its surface with a suspension, where the suspension has been produced using a liquid and at least particles of cobalt, a cobalt alloy or an intermetallic phase in which cobalt is present and in addition at least one chemical element and/or at least one chemical compound is/are present in particle form or in a form in which a matrix of a chemical element and/or a chemical compound in which cobalt particles, cobalt alloy particles or particles of a cobalt-containing intermetallic phase are embedded is formed during a thermal treatment is/are present in the suspension, and wherein the liquid and/or organic components are removed in a first thermal treatment and
wherein melting and/or sintering of the at least one chemical element and/or the at least one chemical compound is achieved in a second thermal treatment at elevated temperature, and
the cobalt particles, the particles comprising an intermetallic phase in which cobalt is present and/or cobalt alloy particles are embedded in the matrix comprising the at least one chemical element and/or the at least one chemical compound, where
particles formed by or comprising cobalt having an average particle size which is greater than the average particle size of the at least one chemical element and/or the at least one chemical compound are used and the particles which are formed by or comprise cobalt are embedded in the matrix.

7. Process according to Claim 6, **characterized in that** the suspension is produced using water and/or an organic liquid, in particular polyvinyl alcohol and/or pyrrolidone.

8. Process according to Claim 6 or 7, **characterized in that** cobalt is partially dissolved in the at least one chemical element and/or the at least one chemical compound in the second thermal treatment.

9. Process according to any of Claims 6 to 8, **characterized in that** cobalt particles, cobalt alloy particles or particles of an intermetallic phase comprising cobalt which have an average particle size which is at least twice that of the other particles are used.

## Revendications

1. Elément poreux catalytiquement actif, qui contient au moins 40 % en masse de cobalt et comportant au moins un autre élément chimique et/ou au moins un composé chimique qui forme une matrice dans laquelle sont incorporées des particules de cobalt pur, d'un alliage de cobalt ou d'une phase intermétallique formée avec le cobalt, et
l'au moins un élément chimique et/ou l'au moins un composé chimique présentant une température de frittage et/ou de fusion inférieure à celle du cobalt, de l'alliage de cobalt correspondant ou de la phase intermétallique, et/ou
le cobalt y étant partiellement soluble, et/ou
ensemble avec le cobalt, formant un eutectique et/ou un péritectique ;
au moins 50 % de la surface étant formée de cobalt, d'un alliage de cobalt ou d'une phase intermétallique formée avec le cobalt, qui est incorporé dans la matrice qui est formée avec un autre élément chimique et/ou au moins un composé chimique, et
en tant qu'élément chimique et/ou composé chimique, du cuivre, de l'aluminium, du manganèse, du zinc, du titane, du cobalt ou un alliage ou une phase intermétallique de ces métaux, un carbure, un phosphure ou un borure, formant la matrice.

2. Elément selon la revendication précédente, **caractérisé en ce que** c'est Co₃B qui forme la matrice.

3. Elément selon l'une des revendications précédentes, **caractérisé en ce qu'**une porosité d'au moins 80 % est maintenue.

4. Elément selon la revendication 1, 2 ou 3, **caractérisé en ce qu'**une grosseur de pore au maximum de 3 mm est maintenue.

5. Elément selon l'une des revendications précédentes, **caractérisé en ce que** l'élément présente des dimensions extérieures qui ne sont pas supérieures à 40 mm * 40 mm * 10 mm, et/ou **en ce que** le rayon extérieur est inférieur à 40 mm.

6. Procédé de fabrication d'un élément poreux catalytiquement actif selon l'une des revendications précédentes, dans lequel la surface d'un élément poreux polymère est revêtue d'une suspension, la suspension ayant été fabriquée avec un liquide et au moins des particules de cobalt, un alliage de cobalt ou une phase intermétallique contenant du cobalt, et la suspension contenant en outre au moins un élément chimique et/ou au moins un composé chimique sous forme de particules ou sous une forme sous laquelle, dans le cas d'un traitement thermique, il y a formation d'une matrice d'un élément chimique et/ou d'un composé chimique dans laquelle sont incorporées des particules de cobalt, des particules d'alliage de cobalt ou des particules d'une phase intermétallique contenant du cobalt, et
lors d'un premier traitement thermique, on élimine le liquide et/ou les composants organiques, et
lors d'un second traitement thermique à haute température, on réalise une fusion et/ou un frittage de l'au moins un élément chimique et/ou de l'au moins un composé chimique, et
les particules de cobalt, les particules ayant une phase intermétallique contenant du cobalt, et/ou les particules d'alliage de cobalt étant alors incorporées dans la matrice formée par l'au moins un élément chimique et/ou l'au moins un composé chimique,
dans lequel on utilise des particules formées de cobalt ou avec du cobalt, ayant une granulométrie moyenne supérieure à la granulométrie moyenne de l'au moins un élément chimique et/ou de l'au moins un composé chimique, et les particules formées de cobalt ou avec du cobalt étant incorporées dans la matrice.

7. Procédé selon la revendication 6, **caractérisé en ce que** la suspension est fabriquée avec de l'eau et/ou un liquide organique, en particulier le poly(alcool vinylique) et/ou la pyrrolidone.

8. Procédé selon la revendication 6 ou 7, **caractérisé en ce que**, lors du second traitement thermique, le cobalt est en partie dissous dans l'au moins un élément chimique et/ou dans l'au moins un composé chimique.

9. Procédé selon l'une des revendications 6 à 8, **caractérisé en ce qu'**on utilise des particules de cobalt, d'un alliage de cobalt ou des particules d'une phase intermétallique formée avec du cobalt, qui présentent une granulométrie moyenne qui est choisie au moins double de celle des autres particules utilisées.
